# EUROPÄISCHE PATENTSCHRIFT

(11) **EP 1 718 507 B1**
(45) Veröffentlichungstag und Bekanntmachung des Hinweises auf die Patenterteilung: **16.01.2008**
(21) Anmeldenummer: 05707548.3
(22) Anmeldetag: 21.02.2005
(51) Int. Cl.: B60S 1/04

(54) **SCHEIBENWISCHANLAGE FÜR FAHRZEUGE SOWIE BEFESTIGUNGSELEMENT FÜR EINE SOLCHE ANLAGE**
WINDSCREEN WIPER SYSTEM FOR VEHICLES AND FIXING DEVICE FOR SUCH A SYSTEM
SYSTEME D'ESSUIE-GLACES POUR VEHICULES ET ELEMENT DE FIXATION POUR UN SYSTEME DE CE TYPE

(30) Priorität: 23.02.2004 DE 102004009040
(43) Veröffentlichungstag der Anmeldung: 08.11.2006
(73) Patentinhaber: VALEO SYSTEMES D'ESSUYAGE, 78321 La Verrière (FR)
(72) Erfinder: EGNER-WALTER, Bruno, 74076 Heilbronn (DE); SCHÄUBLE, Michael, 71665 Vaihingen / Enz (DE)
(74) Vertreter: Jahn, Wolf-Diethart
(86) Internationale Anmeldenummer: PCT/EP2005/001771
(87) Internationale Veröffentlichungsnummer: WO 2005/080156

(56) Entgegenhaltungen:
- EP-A- 0 952 053
- WO-A-03/039920

## Beschreibung

Die Erfindung bezieht sich auf eine Scheibenwischanlage für Fahrzeuge, insbesondere für Kraftfahrzeuge gemäß Oberbegriff Patentanspruch 1 sowie auf ein Befestigungselement für derartige Anlagen gemäß Oberbegriff Patentanspruch 17. Eine solche Scheibenwischanlage ist aus der WO03/039920 bekannt.

Bekannt sind sogenannte Plug & Wipe - Wischanlagen, deren Montage im jeweiligen Kraftfahrzeug über Befestigungen oder Verbindungen erfolgt, welche aus zapfenartigen Befestigungselementen an der Scheibenwischanlage bzw. an einem dortigen Träger und aus fahrzeug- oder karosserieseitigen Aufnahme- oder Befestigungsöffnungen bestehen, in die die Befestigungselemente durch Einschieben und Verrasten verankert werden.

Die zapfenartigen Befestigungselemente bestehen dabei u. a. aus einer elastischen Hülse oder Tülle, die an einem Tüllenende mit einem über den Tüllenumfang wegstehenden flanschartigen Tüllenabschnitt eine axiale Anlagefläche bildet und am anderen Tüllenende mit einer über den Tüllenumfang wegstehenden Rast versehen ist. Nachteilig hierbei ist, dass eine ausreichend sichere Verankerung der Scheibenwischanlage im Fahrzeug, die (Verankerung) ein unerwünschtes Lösen bzw. Demontieren während des Betriebs der Scheibenwischanlage verhindert, auch bedeutet, dass beim Montieren bedingt durch das hierbei notwendige Verformen der Tülle eine hohe Montagekraft erforderlich ist.

Aufgabe der Erfindung ist es, diesen Nachteil zu beheben und eine hochbelastbare Verankerung bei reduzierter Montagekraft zu erreichen. Zur Lösung dieser Aufgabe ist eine Scheibenwischanlage entsprechend dem Patentanspruch 1 ausgebildet. Ein Befestigungselement zur Verwendung bei einer Scheibenwischanlage ist entsprechend dem Patentanspruch 17 ausgebildet.

Mit der erfindungsgemäßen Ausbildung wird in vorteilhafter Weise eine Entkopplung zwischen der hochbelastbaren Verankerung und der Montagekraft erreicht, und zwar dadurch, dass durch die wenigstens eine Ausnehmung, die zusätzlich zu der Hülsen- oder Tüllenöffnung vorgesehen ist, ein Raum geschaffen wird, in welchen sich das Material der Tülle beim Einschieben in die jeweilige Aufnahme- oder Befestigungsöffnung bis zum Verrasten ausweichen kann, sodass hierdurch die Montage mit reduziertem Kraftaufwand möglich ist, und zwar auch bei Verwendung eines Materials für die Tülle, welches durch eine erhöhte Steifigkeit die angestrebte hochbelastbare Verankerung ermöglicht, sodass ein Trennen der jeweiligen Verbindung nur unter Aufwendung von Kräften möglich ist, die wesentlich größer sind als diejenigen Kräfte, mit denen die Verbindungen bei einem normalen Betrieb der Scheibenwischanlage beaufschlagt werden.

Weiterbildungen der Erfindung sind Gegenstand der Unteransprüche. Die Erfindung wird im Folgenden anhand der Figuren an Ausführungsbeispielen näher erläutert.

Es zeigen:
- Fig. 1: in perspektivischer Darstellung eine Scheibenwischanlage für Fahrzeuge mit einem durch Verrasten an einer Fahrzeugkarosserie montierbaren Träger;
- Fig. 2: die Elemente eines Befestigungselementes des Trägers, zusammen mit einer von einem Durchzug der Fahrzeugkarosserie gebildeten Aufnahme- oder Befestigungsöffnung, jeweils im Schnitt;
- Fig. 3: das Befestigungselement der Figur 2 bei an der Karosserie befestigtem Träger;
- Fig. 4: in Einzeldarstellung und im Schnitt die Tülle aus gummielastischem Material des Befestigungselementes der Figuren 2 und 3;
- Fig. 5-7: Darstellungen ähnlich den Figuren 2-4, jedoch bei einer weiteren möglichen Ausführungsform der Erfindung.

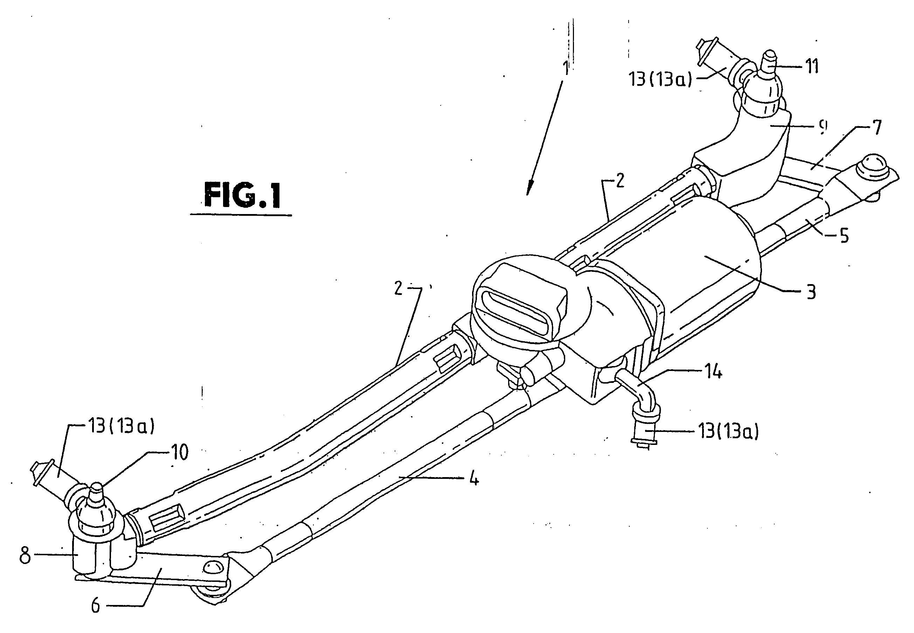

In den Figuren ist 1 eine Scheibenwischanlage für Kraftfahrzeuge, die in bekannter Weise im Wesentlichen aus einem rohrartigen Träger 2, aus einem elektromotorischen Antrieb 3, der seitlich am Träger zwischen den beiden Trägerenden befestigt ist und an seiner Ausgangswelle eine Kurbel aufweist, aus zwei Koppelstangen 4 und 5, die jeweils mit einem Ende an der in der Figur 1 nicht sichtbaren Kurbel angelenkt und mit ihren anderen Enden mit Schwingen 6 und 7 gelenkig verbunden sind, sowie aus an den beiden Enden des Trägers 2 vorgesehenen Wischerwellenlagern 8 und 9 besteht, in denen jeweils eine Wischerwelle 10 bzw. 11 drehbar gelagert ist. Die im Wischerwellenlager 8 gelagerte Wischerwelle 10 ist mit der radial von dieser Welle wegstehenden Schwinge 6 und die im Wischerwellenlager 9 gelagerte Wischerwelle 11 ist mit der radial von dieser Welle wegstehenden Schwinge 7 verbunden.

Zum Befestigen der Scheibenwischanlage bzw. des Trägers 2 an einem Blech 12 der Karosserie, sind bei der dargestellten Ausführungsform drei Befestigungselemente 13 vorgesehen, die jeweils identisch ausgebildet sind und eine Drei-Punkt-Befestigung oder -Verbindung bilden, bei der die Befestigungselemente 13 entsprechend den Eckpunkten eines Dreiecks relativ zueinander räumlich versetzt angeordnet sind. In diesem Sinne befinden sich zwei Befestigungselemente-13-an den Enden des rohrförmigen Trägers 12 bzw. an den dortigen Wischerwellenlagern 8 und 9. Ein Befestigungselement 13 ist an einem zusätzlichen, vom elektromotorischen Antrieb 3 wegstehenden abgewinkelten Tragarm 14 vorgesehen.

Bei der dargestellten Ausführungsform sind die beiden Befestigungselemente 13 an den Wischerwellenlagern 8 und 9 mit ihren Achsen in etwa parallel zueinander und in einer gemeinsamen Ebene liegend vorgesehen. Das Befestigungselement 13 an dem Ende des abgewinkelten Tragarmes 14 ist mit seiner Achse quer oder senkrecht zu dieser Ebene orientiert.

Sämtliche Befestigungselemente 13 sind so ausgebildet, dass mit ihnen die Montage der Schelbenwischanlage 1 bzw. des Trägers 2 an die Fahrzeugkarosserie jeweils durch axiales Einschieben des zapfenartigen Befestigungselementes 13 in eine bei der dargestellten Ausführungsform von einem Durchzug 15 gebildete Befestigungsöffnung 16 und durch Verrasten an diesem Durchzug 15 bzw. an der Befestigungsöffnung 16möglich ist.

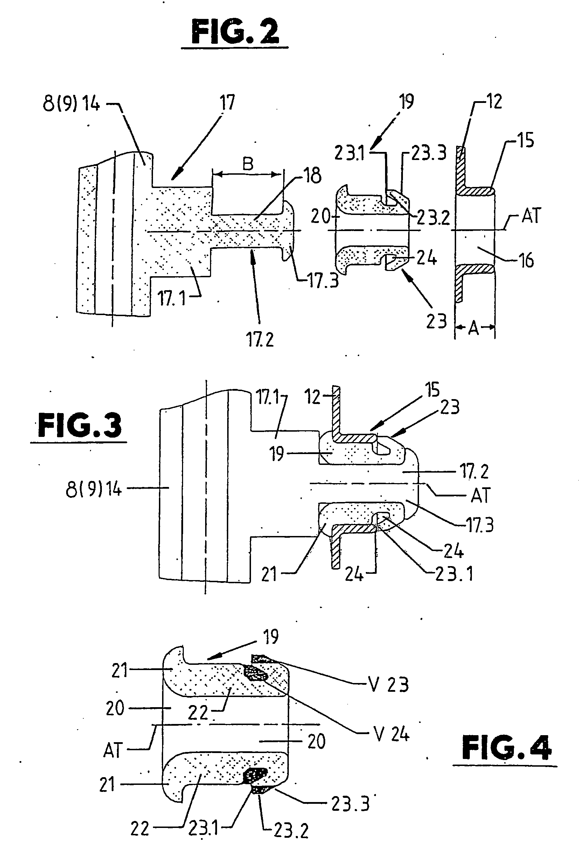

Die Figuren 2 und 3 zeigen eines der Befestigungselemente 13 in vergrößerter Darstellung, zusammen mit dem Blech 12 und dem die Befestigungsöffnung 16 bildenden Durchzug 15 in diesem Blech.

Jedes Befestigungselement 13 besteht im Wesentlichen aus einem Zapfen 17, der beispielsweise an dem betreffenden Wischerwellenlager 8 bzw. 9 angeformt oder aber von dem Ende des Tragarmes 14 gebildet ist. Ausgehend von dem Wischerlager 8 bzw. 9 oder dem Tragarm 14 weist der Zapfen 17 zunächst einen Zapfenabschnitt 17.1 mit vergrößertem Durchmesser daran zum freien Zapfenende anschließend einen Abschnitt 17.2 mit reduziertem Durchmesser auf. In den Zapfenabschnitt 17.2 ist eine Umfangsnut 18 eingebracht, deren Breite nahezu die gesamte axiale Länge des Zapfenabschnittes 17.2 einnimmt, sodass der Zapfenabschnitt 17.2 mit der Nut 18 eine pilzzapfenartige Formgebung mit einem im Querschnitt vergrößerten Zapfenende 17.3 aufweist. Bestandteil jedes Befestigungselementes 13 ist weiterhin eine Hülse-oder Tülle 19 aus einem dauerelastischen Material, beispielsweise aus Gummi oder einem elastomeren Kunststoff. Die axiale Gesamtlänge der Tülle 19 ist gleich oder etwas größer als die Breite B der Nut 18. Der Durchmesser der Hülsenöffnung 20 der Tülle 19 ist gleich oder geringfügig kleiner als der Durchmesser, den der Zapfenabschnitt 17.2 im Bereich der Nut 18 aufweist. An einem Ende ist die Tülle 19 einstückig mit einem flanschartigen Abschnitt 21 mit vergrößertem Außendurchmesser geformt, an den sich zu dem anderen Tüllenende hin ein Abschnitt 22 anschließt, an dem die Tülle 19 bzw. die kreiszylinderförmige Außenfläche dieser Tülle einen Durchmesser aufweist, der kleiner ist als der Außendurchmesser des Abschnittes 22, aber gleich oder geringfügig größer als der Querschnitt der Öffnung 16. An dem dem Abschnitt 21 entfernt liegenden anderen Ende ist die Tülle 19 mit einem als Rast wirkenden ringartigen Vorsprung 23 geformt, der die Achse AT der Tülle 19 konzentrisch umschließt und über die kreiszylinderförmige Außenfläche des Abschnittes 22 vorsteht. An seiner dem Abschnitt 21 zugewandten Seite bildet der Vorsprung 23 eine Rastfläche 23.1, daran anschließend eine Ringfläche 23.2 und an der dem Abschnitt 21 abgewandten Seite eine sich zu dem dort benachbarten Ende der Tülle 19 hin verjüngende Kegelfläche 23.3.

Unmittelbar an der Rastfläche 23.1 ist in die Tülle 19 zusätzlich zur Tüllenöffnung 20 eine die Achse der Tülle 19 konzentrisch umschließende ringförmige Nut oder Ausnehmung 24 eingeformt, die sich mit einer Erweiterung auch unterhalb des Vorsprungs 23 erstreckt und an der Umfangsfläche der Tülle 19 bzw. des Tüllenabschnittes 22 in unmittelbarer Nähe der Rastfläche 23.1 offen ist. Die ringnutartige Ausnehmung 24 ist so ausgebildet, dass bei einem elastischen Verformen des Vorsprunges 23 radial nach Innen dieser Vorsprung bzw. das bei diesem elastischen Verformen verdrängte Material der Tülle 19 von der Ausnehmung 24 aufgenommen werden kann.

Wie in der Figur 4 dargestellt, ist das Volumen V24 der Ausnehmung 24 so gewählt, dass es wenigstens gleich, bevorzugt aber etwas größer ist als das Volumen V23 des ringförmigen, über die kreiszylinderförmige Umfangsfläche des Tüllenabschnittes 22 vorstehenden Vorsprungs 23.

Bei fertig montiertem Befestigungselement 13 sitzt die Tülle 19 gegen ein axiales Verschieben gesichert auf dem Zapfenabschnitt 17.2, und zwar derart, dass die Tülle 19 in der Nut 18 passend aufgenommen ist, der sich Tüllenabschnitt 21 an der dem Zapfenabschnitt 17.1 benachbarten Seite der Nut 18 und das den ringartigen Vorsprung 23 aufweisende Tüllenende an der dem Zapfenende 17.3 benachbarten Seite der Nut 18 abstützen. Der Außendurchmesser des Zapfenendes 17.3 ist dabei kleiner als der Außendurchmesser der Tülle 19. Für die Montage des Befestigungselementes 13 wird die beispielsweise in einem Spritzgießverfahren hergestellte Tülle 19 auf den Zapfenabschnitt 17.2 aufgeschoben oder die Tülle 19 wird in einem geeigneten Verfahren an dem Zapfenabschnitt 17.2 durch Anspritzen erzeugt.

Bei der Montage der Scheibenwischanlage 1 wird jeder mit der Tülle 19 versehene Zapfen 17 in die Öffnung 16 des entsprechenden Durchzuges 15 eingesetzt, wobei über kegelstumpfförmige Fläche 23.3 der Vorsprung 23 zunächst elastisch radial nach Innen in die Ausnehmung 24 gedrückt und von dieser Ausnehmung aufgenommen wird, und-zwar solange, bis der Zapfen 17 mit der Tülle 19 vollständig in die Öffnung 16 eingeschoben ist und sich der Vorsprung 23 wieder aufstellen, d.h. radial nach Außen bewegen kann und dabei mit seiner Rastfläche 23.1 die die Öffnung 16 umgebende Gegenfläche des Durchzuges 15 rastend hintergreift, sodass dann über das betreffende Befestigungselement 13 die Scheibenwischanlage 1 durch Verrasten an der Fahrzeugkarosserie gehalten ist. Ein besonderer Vorteil der Befestigungselemente 13 besteht darin, dass bei geringer Montagekraft durch entsprechende Wahl des Materials für die Tülle eine sichere Verankerung in der jeweiligen Befestigungsöffnung 16 erreicht wird, sodass trotz einer reduzierten Montagekraft die Scheibenwischanlage bzw. deren Träger 2 zuverlässig an der Fahrzeugkarosserie gehalten ist und insbesondere auch die beim Betrieb der Scheibenwischanlage auftretenden Kräfte nicht zu einer Demontage der Anlage führen kann.

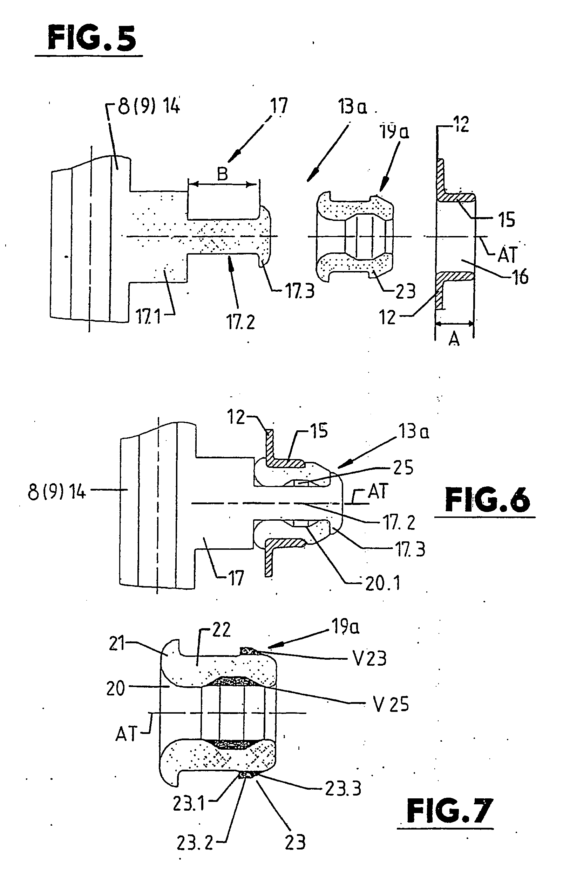

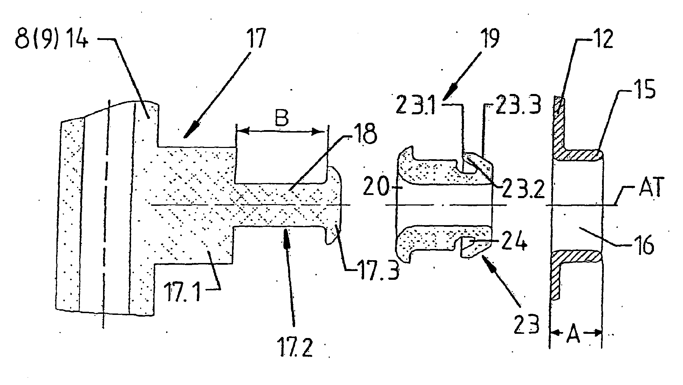

Die Figuren 5-7 zeigen als weitere mögliche Ausführungsform ein Befestigungselement 13a, welches sich von dem Befestigungselement 13 lediglich dadurch unterscheidet, dass anstelle der Tülle 19 eine Tülle 19a verwendet ist. Diese besitzt wiederum die Tüllenabschnitte 21 und 22 und den an einem Ende der Tülle 19a vorgesehenen Vorsprung 23 mit der Rastfläche 23.1, der Zylinder- oder Ringfläche 23.2 und der Kegelfläche 23.3. Bei der Tülle 19a fehlt allerdings die ringnutartige Ausnehmung 24. Anstelle dieser Ausnehmung 24 ist die Tüllenöffnung 20 mit einem Abschnitt 20.1 mit vergrößertem Durchmesser ausgebildet, und zwar zwischen den beiden Enden der Tülle 19a. Der Abschnitt 20.1 erstreckt sich bei der dargestellten Ausführungsform etwa unterhalb der Ringfläche 23.2, der Rastfläche 23.1 und über eine Teillänge des zwischen der Rastfläche 23.1 und dem Tüllenabschnitt 21 gebildeten Teils des Tüllenabschnittes 22. Bei auf dem Zapfenabschnitt 17.2 montierter Tülle 19a, die dann wiederum mit ihrem Tüllenabschnitt 21 gegen die dem Zapfenabschnitt 17.1 benachbarte Seite der Nut 18 und mit ihrem anderen Tüllenende gegen die dem Zapfenabschnitt 17.3 benachbarten Rand der Nut 18 angepresst anliegt, bildet der Abschnitt 20.1 einen Hohlraum 25. Das Volumen V25 dieses Hohlraumes 25 ist dabei so gewählt, dass es wenigstens gleich, bevorzugt aber größer ist als das Volumen V23 des ringartigen Vorsprunges 23, sodass wiederum bei der Montage der die Befestigungselemente 13a aufweisenden Scheibenwischanlage 1 beim Einschieben des jeweiligen Befestigungselementes 13a in die Befestigungsöffnung 16 der jeweilige Vorsprung 23 radial nach Innen verformt werden kann, und zwar unter Aufnahme des hierbei verdrängten Tüllen-Volumens in der Ausnehmung 25 solange, bis nach dem vollständigen Einschieben des Befestigungselementes 13a in die von einem Durchzug 15 gebildete Befestigungsöffnung 16 der Vorsprung 23 wiederum radial nach Außen in seine Ausgangsstellung zurückkehren kann und hierdurch den die Öffnung 16 des Durchzuges 15 umschließenden Rand rastend hintergreift. Auch bei dieser Ausführung ist durch den Abschnitt 20.1 bzw. durch den Hohlraum 25 eine hochbelastbare Verankerung bei geringer Montagekraft erreicht.

Bei beiden Ausführungsformen ist die Tülle 19 bzw. 19a jeweils so ausgebildet, dass der axiale Abstand zwischen der Rastfläche 23.1 und der dieser Rastfläche zugewandten Seite des Tüllenabschnittes 21 höchstens gleich, bevorzugt aber etwas kleiner ist als das axiale Maß A des Durchzuges 15, sodass insbesondere durch elastisches Verformen des Tüllenabschnittes 21 eine spielfreie Montage der Scheibenwischanlage 2 an der Karosserie erreicht ist.

Die Erfindung wurde voranstehend an Ausführungsbeispielen beschrieben. Es versteht sich, dass Änderungen sowie Abwandlungen möglich sind, ohne das dadurch der der Erfindung zugrunde liegende und durch die folgenden Ansprüche definierte Erfindungsgedanke verlassen wird. So ist es beispielsweise möglich, die Befestigungselemente 13 bzw. 13a oder ähnliche Befestigungselemente am Fahrzeugkörper oder an der Fahrzeugkarosserie bzw. an dortigen Halteeinrichtungen vorzusehen und die zugehörigen Aufnahme- oder Befestigungsöffnungen an der Scheibenwischanlage oder an dem Träger. Auch Kombinationen sind möglich, d. h. Ausführungen, bei denen ein Teil der Befestigungselemente an der Scheibenwischanlage und ein Teil der Befestigungselemente an der Fahrzeugkarosserie bzw. an dortigen Trägern vorgesehen sind.

### Bezugszeichenliste

- 1: Scheibenwischanlage
- 2: Träger
- 3: elektromotorischer Antrieb
- 4, 5: Koppelstange
- 6, 7: Schwinge
- 8, 9: Wischerwellenlager
- 10, 11: Wischerwelle
- 12: Fahrzeugkörper oder Karosserieblech
- 13, 13a: Befestigungselement
- 14: Tragarm
- 15: Durchzug
- 16: Aufnahme- oder Befestigungsöffnung
- 17: Zapfen
- 17.1, 17.2: Zapfenabschnitt
- 17.3: freies Zapfenende
- 18: Nut
- 19, 19a: Tülle aus elastischen Material
- 20: Tüllenöffnung
- 20.1: im Querschnitt vergrößerter Abschnitt der Tüllenöffnung
- 21, 22: Tüllenabschnitt
- 23: Vorsprung
- 23.1: Rastfläche
- 23.2: Ringfläche des Vorsprunges
- 23.3: konische Fläche des Vorsprunges
- 24: ringnutartige Ausnehmung mit Erweiterung in der Tülle
- 25: Hohlraum gebildet durch den Öffnungsabschnitt 20.1
- A: axiales Maß des Durchzuges 15
- B: Breite der Nut 18
- AT: Tüllenachse
- V23, V24, V25: Volumen

## Patentansprüche

1. Scheibenwischanlage für Fahrzeuge, insbesondere für Kraftfahrzeuge mit wenigstens drei voneinander beabstandeten Verbindungen zur verchraubungsfreien Montage der Scheibenwischanlage (1) bzw. eines Trägers (2) dieser Anlage an einer Fahrzeugkarosserie, wobei die Befestigungen jeweils aus einem in eine Aufnahme- oder Befestigungsöffnung (16) einschiebbaren und dort durch Verrasten verankerbaren Befestigungselement (13, 13a) bestehen und wobei wenigstens ein Befestigungselement eine in die Aufnahme- oder Befestigungsöffnung einführbare Tülle (19, 19a) aus einem elastischen Material aufweist, die mit wenigstens einem als Rast wirkenden Vorsprung (23) ausgebildet ist, **dadurch gekennzeichnet,**
**dass** an der Tülle im Bereich des Vorsprungs (23) gegenüber diesem bezogen auf eine Tüllenachse (AT) radial nach Innen versetzt wenigstens ein Hohlraum (24, 25) vorgesehen ist.

2. Scheibenwischanlage nach Anspruch 1, **dadurch gekennzeichnet, dass** der Hohlraum eine Ausnehmung, beispielsweise eine ringnutartige Ausnehmung (24) ist.

3. Scheibenwischanlage nach Anspruch 2, **dadurch gekennzeichnet, dass** der Hohlraum eine zum Umfang der Tülle (19) hin offene Ausnehmung (24) ist.

4. Scheibenwischanlage nach einem der vorhergehenden Ansprüche, **dadurch gekennzeichnet, dass** der Hohlraum (24) eine sich unter den wenigstens einen Vorsprung (23) erstreckende Erweiterung aufweist.

5. Scheibenwischanlage nach einem der vorhergehenden Ansprüche, **dadurch gekennzeichnet, dass** der Hohlraum (24) an der Umfangsfläche der Tülle (19) in der Nähe der Rastfläche (23.1) offen ist.

6. Scheibenwischanlage nach einem der vorhergehenden Ansprüche, **dadurch gekennzeichnet, dass** der wenigstens eine Vorsprung ein die Tüllenachse (AT) konzentrisch umschließender ringförmiger Vorsprung (23) ist.

7. Scheibenwischanlage nach einem der vorhergehenden Ansprüche, **dadurch gekennzeichnet, dass** der Hohlraum (25) von einem dem Querschnitt vergrößerten Abschnitt (20.1) der Tüllenöffnung (20) gebildet ist.

8. Scheibenwischanlage nach einem der vorhergehenden Ansprüche, **dadurch gekennzeichnet, dass** die Tülle (19, 19a) aus einem gummielastischen Material, beispielsweise aus Gummi oder einem gummielastischen Kunststoff gefertigt ist.

9. Scheibenwischanlage nach einem der vorhergehenden Ansprüche, **dadurch gekennzeichnet, dass** die Tülle (19, 19a) eine von der wenigstens einen Rastfläche (23.1) axial beabstandete weitere tüllenseitige Anlagefläche (21) bildet, und dass der axiale Abstand zwischen dieser weiteren tüllenseitigen Anlagefläche (21) und der wenigstens einen Rastfläche (23.1) höchstens gleich oder kleiner ist als der axiale Abstand zwischen einer an der Aufnahme- oder Befestigungsöffnung (16) gebildeten von der Rastfläche (23.1) hintergriffenen ersten Fläche und einer an der Aufnahme- oder Befestigungsöffnung (16) gebildeten zweiten Fläche, die gegen die weitere tüllenseitige Anlagefläche (21) anliegt.

10. Scheibenwischanlage nach Anspruch 9, **dadurch gekennzeichnet, dass** die weitere tüllenseitige Anlagefläche von einem über den Umfang der Tülle wegstehenden flanschartigen Tüllenabschnitt (21) gebildet ist.

11. Scheibenwischanlage nach einem der vorhergehenden Ansprüche, **dadurch gekennzeichnet, dass** die Tülle (19, 19a) auf einem Zapfen (17) oder Zapfenabschnitt (17.2) des Befestigungselementes (13, 13a) axial nicht verschiebbar vorgesehen ist.

12. Scheibenwischanlage nach Anspruch 11, **dadurch gekennzeichnet, dass** die Tülle (19, 19a) durch Hinterschnitte zwischen Zapfen (17) und Tülle (19, 19a) axial auf dem Zapfen (17) gesichert ist.

13. Scheibenwischanlage nach Anspruch 12, **dadurch gekennzeichnet, dass** der Zapfen (17) oder der Zapfenabschnitt (17.2) wenigstens eine Nut (18) zur Aufnahme der Tülle (19) aufweist.

14. Scheibenwischanlage nach einem der vorhergehenden Ansprüche, **dadurch gekennzeichnet, dass** die Befestigungselemente (13, 13a) zumindest zu einem Teil an der Scheibenwischanlage (1) bzw. an einem Element (8, 9, 14) der Scheibenwischanlage (1) und die zugehörigen Befestigungs oder Aufnahmeöffnungen karosserieseitig vorgesehen sind.

15. Scheibenwischanlage nach einem der vorhergehenden Ansprüche, **dadurch gekennzeichnet, dass** die Befestigungselemente (13, 13a) zumindest zu einem Teil karosserieseitig und die zugehörigen Befestigungs- oder Aufnahmeöffnungen (16) an der Scheibenwischanlage (1) bzw. an einem Funktionselement (8, 9, 14) der Scheibenwischanlage (1) vorgesehen sind.

16. Scheibenwischanlage nach einem der vorhergehenden Ansprüche, **dadurch gekennzeichnet, dass** das Volumen (V24, V25) des wenigstens einen Hohlraums (24, 25) wenigstens gleich dem Volumen (23) des des Vorsprungs (23) ist.

17. Befestigungselement zur verschraubungsfreien Montage einer Scheibenwischanlage (1) für Fahrzeuge, insbesondere für Kraftfahrzeuge an einer Fahrzeugkarosserie, wobei das in eine Aufnahme- oder Befestigungsöffnung (16) einschiebbare und dort durch Verrasten verankerbare Befestigungselement (13, 13a) eine Tülle (19, 19a) aus einem elastischen Material aufweist, die in die Aufnahme- oder Befestigungsöffnung einführbar und für das Verrasten mit wenigstens einem als Rast wirkenden Vorsprung (23) ausgebildet ist, **dadurch gekennzeichnet,**
**dass** an der Tülle im Bereich des Vorsprungs (23) gegenüber diesem bezogen auf eine Tüllenachse (AT) radial nach innen versetzt wenigstens ein Hohlraum (24, 25) vorgesehen ist.

18. Befestigungselement nach Anspruch 17, **dadurch gekennzeichnet, dass** der Hohlraum eine Ausnehmung, beispielsweise eine ringnutartige Ausnehmung (24) ist.

19. Befestigungselement nach Anspruch 18, **dadurch gekennzeichnet, dass** der Hohlraum eine zum Umfang der Tülle (19) hin offene Ausnehmung (24) ist.

20. Befestigungselement nach einem der Ansprüche 17-19, **dadurch gekennzeichnet, dass** der Hohlraum (24) eine sich unter den wenigstens einen Vorsprung (23) erstreckende Erweiterung aufweist.

21. Befestigungselement nach einem der Ansprüche 17-20, **dadurch gekennzeichnet, dass** der Hohlraum (24) an der Umfangsfläche der Tülle (19) in der Nähe der Rastfläche (23.1) offen ist.

22. Befestigungselement nach einem der Ansprüche 17-21, **dadurch gekennzeichnet, dass** der wenigstens eine Vorsprung ein die Tüllenachse (AT) konzentrisch umschließender ringförmiger Vorsprung (23) ist.

23. Befestigungselement nach einem der Ansprüche 17-22, **dadurch gekennzeichnet, dass** der Hohlraum (25) von einem im Querschnitt vergrößerten Abschnitt (20.1) der Tüllenöffnung (20) gebildet ist.

24. Befestigungselement nach einem der Ansprüche 17-23, **dadurch gekennzeichnet, dass** die Tülle (19, 19a) aus einem gummielastischen Material, beispielsweise aus Gummi oder einem gummielastischen Kunststoff gefertigt ist.

25. Befestigungselement nach einem der Ansprüche 17-24, **dadurch gekennzeichnet, dass** die Tülle (19, 19a) eine von der wenigstens einen Rastfläche (23.1) axial beabstandete weitere tüllenseitige Anlagefläche (21) bildet, und dass der axiale Abstand zwischen dieser weiteren tüllenseitigen Anlagefläche (21) und der wenigstens einen Rastfläche (23.1) höchstens gleich oder kleiner ist als der axiale Abstand zwischen einer an der Aufnahme- oder Befestigungsöffnung (16) gebildeten von der Rastfläche (23.1) hintergriffenen ersten Fläche und einer an der Aufnahme- oder Befestigungsöffnung (16) gebildeten zweiten Fläche, die gegen die weitere tüllenseitige Anlagefläche (21) anliegt.

26. Befestigungselement nach Anspruch 25, **dadurch gekennzeichnet, dass** die weitere tüllenseitige Anlagefläche von einem über den Umfang der Tülle wegstehenden flanschartigen Tüllenabschnitt (21) gebildet ist.

27. Befestigungselement nach einem der Ansprüche 17-26, **dadurch gekennzeichnet, dass** die Tülle (19, 19a) auf einem Zapfen (17) oder Zapfenabschnitt (17.2) des Befestigungselementes (13, 13a) axial nicht verschiebbar vorgesehen ist.

28. Befestigungselement nach Anspruch 27, **dadurch gekennzeichnet, dass** die Tülle (19, 19a) durch Hinterschnitte zwischen Zapfen (17) und Tülle (19, 19a) axial auf dem Zapfen (17) gesichert ist.

29. Befestigungselement nach Anspruch 28, **dadurch gekennzeichnet, dass** der Zapfen (17) oder der Zapfenabschnitt (17.2) wenigstens eine Nut (18) zur Aufnahme der Tülle (19) aufweist.

30. Befestigungselement nach einem der Ansprüche 17-29, **dadurch gekennzeichnet, dass** das Volumen (V24, V25) des wenigstens einen Hohlraums (24, 25) wenigstens gleich dem Volumen (23) des des Vorsprungs (23) ist.

## Claims

1. Windscreen wiper module for vehicles, particularly vehicles with at least three connections at an interval from one another for screwless installation of the windscreen wiper module (1) or a carrier (2) of this module on vehicle bodywork, with the fixings consisting respectively of a fixing system (13, 13a) insertable in a receiving or fixing orifice (16) and anchorable by engagement there, with at least one fixing system having a grommet (19, 19a) made of elastic material insertable in the receiving or fixing orifice, which is designed with at least one projection (23) acting as a catch, **characterised in that**, on the grommet in the area of the projection (23), opposite the latter in relation to a grommet axis (AT), at least one cavity (24, 25) is provided radially offset inwards.

2. Windscreen wiper module according to claim 1, **characterised in that** the cavity is a recess, for example a circumferential groove-like recess (24).

3. Windscreen wiper module according to claim 2, **characterised in that** the cavity is a recess (24) open to the circumference of the grommet (19).

4. Windscreen wiper module according to any of the above claims, **characterised in that** the cavity (24) has an extension stretching under the at least one projection (23).

5. Windscreen wiper module according to any of the above claims, **characterised in that** the cavity (24) on the circumferential area of the grommet (19) is open in the vicinity of the locking area (23.1).

6. Windscreen wiper module according to any of the above claims, **characterised in that** at least one projection is a ring-shaped projection (23) concentrically surrounding the grommet axis (AT).

7. Windscreen wiper module according to any of the above claims, **characterised in that that** cavity (25) is formed by a cross-section of the enlarged section (20.1) of the grommet orifice (20).

8. Windscreen wiper module according to any of the above claims, **characterised in that** the grommet (19, 19a) is manufactured from an elastic rubber material.

9. Windscreen wiper module according to any of the above claims, **characterised in that** the grommet (19, 19a) forms a further bearing surface (21) on the grommet side at an axial distance from the at least one locking area (23.1) and that the axial distance between this further bearing surface (21) on the grommet side and the at least one locking area (23.1) is at the most equal to or smaller than the axial distance between a first surface grasped from behind on the receiving or fixing orifice (16) formed by the locking area (23.1), which lies against the further bearing surface (21) on the grommet side.

10. Windscreen wiper module according to claim 9, **characterised in that** the further bearing surface on the grommet side is formed by a flange-like grommet section (21) projecting over the circumference of the grommet.

11. Windscreen wiper module according to any of the above claims, **characterised in that** the grommet (19, 19a) is designed to be not movable axially on a pin (17) or a section of pin (17.2) of the fixing system (13, 13a).

12. Windscreen wiper module according to claim 11, **characterised in that** the grommet (19, 19a) is secured axially on the pin (17) by undercuts between the pin (17) and the grommet (19, 19a).

13. Windscreen wiper module according to claim 12, **characterised in that** the pin (17) or the section of pin (17.2) has at least one groove (18) to receive the grommet (19).

14. Windscreen wiper module according to any of the above claims, **characterised in that** the fixing systems (13, 13a) are at least partly provided on the windscreen wiper module (1) and the respective fixing or receiving openings on the bodywork side.

15. Windscreen wiper module according to any of the above claims, **characterised in that** the fixing systems (13, 13a) are at least partially provided on the bodywork side and the respective fixing or receiving orifices (16) are provided on the windscreen wiper module (1) or on a functional element (8, 9, 14) of the windscreen wiper module (1).

16. Windscreen wiper module according to any of the above claims, **characterised in that** the volume (V24, V25) of the at least one cavity (24, 25) is at least equal to the volume (23) of that of the projection (23).

17. Fixing system for screwless installation of a windscreen wiper module (1) for vehicles, particularly for motor vehicles, on vehicle bodywork, with the fixing system (13, 13a) insertable and anchorable in a receiving or fixing orifice (16) has a grommet (19, 19a) made of an elastic material, which can be inserted in the receiving or fixing orifice and is designed with at least one projection (23) acting as a catch, **characterised in that** on the grommet in the area of the projection (23), offset radially inwards in relation to a grommet axis (AT), at least one cavity (24, 25) is provided.

18. Fixing system according to claim 17, **characterised in that** the cavity is a recess, for example a circumferential groove-like recess (24).

19. Fixing system according to claim 18, **characterised in that** the cavity is a recess (24) open to the circumference of the grommet (19).

20. Fixing system according to any of claims 17-18, **characterised in that** the cavity (24) has an extension stretching under the at least one projection (23).

21. Fixing system according to any of claims 17-20, **characterised in that** the cavity (24) is open in the circumferential area of the grommet (19) in the vicinity of the locking area (23.1).

22. Fixing system according to any of claims 17-21, **characterised in that** the at least one projection is a ring-shaped projection (23) concentrically surrounding the grommet axis (AT).

23. Fixing system according to any of claims 17-22, **characterised in that** the cavity (25) is formed by a section (20.1) enlarged in cross-section of the grommet orifice (20).

24. Fixing system according to any of claims 17-23, **characterised in that** the grommet (19, 19a) is manufactured from elastic rubber material, e.g. from rubber or an elastic rubber plastic.

25. Fixing system according to any of claims 17-24, **characterised in that** the grommet (19, 19a) forms a further bearing surface at an axial interval from the at least one locking area on the grommet side (21) and that the axial distance between this further bearing surface (21) on the grommet side and the at least one locking area (23.1) is at the most equal to or less than the axial distance between an initial surface on the receiving or fixing orifice (16) formed by the locking area (23.1), which is in contact with the further bearing surface (21) on the grommet side.

26. Fixing element according to claim 25, **characterised in that** the further bearing surface on the grommet side is formed by a flange-like grommet section (21) projecting over the circumference of the grommet.

27. Fixing system according to any of claims 17-26, **characterised in that** the grommet (19, 19a) is designed to be not movable axially on a pin (17) or a section of pin (17.2) of the fixing system (13, 13a).

28. Fixing system according to claim 27, **characterised in that** the grommet (19, 19a) is secured axially on the pin (17) by undercuts between the pin (17) and the grommet (19, 19a).

29. Fixing system according to claim 28, **characterised in that** the pin (17) or the section of pin (17.2) has at least one groove (18) to receive the grommet (19).

30. Fixing system according to any of claims 17-29, **characterised in that** the volume (V24-V25) of the at least one cavity (24, 25) is at least equivalent to the volume (23) of that of the projection (23).

## Revendications

1. Système d'essuie-glace destiné à des véhicules, en particulier à des véhicules automobiles comportant au moins trois liaisons éloignées l'une de l'autre, afin d'effectuer un montage sans vissage du système d'essuie-glace (1) ou d'un support (2) de ce système sur la carrosserie du véhicule, moyennant quoi les fixations sont respectivement constituées d'un élément de fixation (13, 13a) pouvant être poussé dans une ouverture de réception ou de fixation (16) et pouvant être ancré par encliquetage, et moyennant quoi au moins un élément ou de fixation présente une douille (19, 19a) pouvant être introduite dans l'ouverture de réception ou de fixation, réalisée dans une matière élastique, qui est dotée d'au moins une saillie (23) faisant office d'élément d'encliquetage, **caractérisé en ce que**, sur la douille, dans la zone de la saillie (23), avec un certain décalage radialement vers l'intérieur par rapport à un axe de la douille (AT), est prévu au moins un espace creux (24, 25).

2. Système d'essuie-glace selon la revendication 1, **caractérisé en ce que** l'espace creux est un évidement, en particulier un évidement (24) de type rainure annulaire.

3. Système d'essuie-glace selon la revendication 2, **caractérisé en ce que** l'espace creux est un évidement (24) débouchant à la périphérie de la douille (19).

4. Système d'essuie-glace selon l'une quelconque des revendications précédentes, **caractérisé en ce que** l'espace creux (24) présente un élargissement s'étendant en dessous de la au moins une saillie (23).

5. Système d'essuie-glace selon l'une quelconque des revendications précédentes, **caractérisé en ce que** l'espace creux (24) débouche, sur la surface périphérique de la douille (19), à proximité de la surface d'encliquetage (23.1).

6. Système d'essuie-glace selon l'une quelconque des revendications précédentes, **caractérisé en ce que** la au moins une saillie est une saillie (23) annulaire entourant concentriquement l'axe de la douille (AT).

7. Système d'essuie-glace selon l'une quelconque des revendications précédentes, **caractérisé en ce que** l'espace creux (25) est formé par une section (20.1) agrandie en coupe de l'ouverture de douille (20).

8. Système d'essuie-glace selon l'une quelconque des revendications précédentes, **caractérisé en ce que** la douille (19, 19a) est réalisée dans une matière élastique de type caoutchouc, par exemple en caoutchouc ou dans une matière plastique élastique de type caoutchouc.

9. Système d'essuie-glace selon l'une quelconque des revendications précédentes, **caractérisé en ce que** la douille (19, 19a) forme une autre surface d'appui (21) du côté douille, éloignée axialement d'au moins une surface d'encliquetage (23.1), et **en ce que** la distance axiale entre cette autre surface d'appui (21) du côté douille et la au moins une surface d'encliquetage (23.1) est tout au plus égale ou inférieure à la distance axiale entre une première surface formée sur l'ouverture de réception ou de fixation (16) et dans laquelle s'engage la surface d'encliquetage (23.1) par l'arrière, et une deuxième surface formée sur l'ouverture de réception ou de fixation (16), qui repose contre l'autre surface d'appui (21) du côté douille.

10. Système d'essuie-glace selon la revendication 9, **caractérisé en ce que** l'autre surface d'appui du côté douille est formée par une section de douille (21) de type bride en saillie sur la périphérie de la douille.

11. Système d'essuie-glace selon l'une quelconque des revendications précédentes, **caractérisé en ce que** la douille (19, 19a) est prévue de manière à ne pas pouvoir se déplacer axialement sur un tourillon (17) sur la section de tourillon (17.2) de l'élément de fixation (13, 13a).

12. Système d'essuie-glace selon la revendication 11, **caractérisé en que** la douille (19, 19a) est bloquée axialement sur le tourillon (17) par des contre-dépouilles entre le tourillon (17) et la douille (19, 19a).

13. Système d'essuie-glace selon la revendication 12, **caractérisé en ce que** le tourillon (17) ou de la section de tourillon (17.2) présente au moins une rainure (18) afin de recevoir la douille (19).

14. Système d'essuie-glace selon l'une quelconque des revendications précédentes, **caractérisé en ce que** les éléments de fixation (13, 13a) sont prévus au moins, pour une partie, sur le système d'essuie-glace (1) ou sur un élément (8, 9, 14) du système d'essuie-glace (1), et les ouvertures de fixation ou de réception associées sont prévues du côté carrosserie.

15. Système d'essuie-glace selon l'une quelconque des revendications précédentes, **caractérisé en ce que** les éléments de fixation (13, 13a) sont prévus au moins pour une partie du côté carrosserie, et les ouvertures de fixation ou de réception (16) associées sont prévues sur le système d'essuie-glace (1) ou sur un élément fonctionnel (8, 9, 14) du système d'essuie-glace (1).

16. Système d'essuie-glace selon l'une quelconque des revendications précédentes, **caractérisé en ce que** le volume (V24, V25) du au moins un espace creux (24, 25) est au moins égal au volume (V23) de la saillie (23).

17. Elément de fixation permettant le montage sans vissage d'un système d'essuie-glace (1) destiné à des véhicules, en particulier à des véhicules automobiles sur une carrosserie de véhicule, moyennant quoi l'élément de fixation (13, 13a) pouvant être poussé dans une ouverture de réception ou de fixation (16) et pouvant alors être ancré par encliquetage présente une douille (19, 19a) réalisée dans une matière plastique, laquelle peut être introduite dans l'ouverture de réception ou de fixation et est configurée pour être ancrée avec au moins une saillie (23) faisant office de taquet d'encliquetage, **caractérisé en ce que**, sur la douille, dans la zone de la saillie (23), en étant décalé radialement vers l'intérieur par rapport à l'axe de la douille (AT), sur l'axe de la douille (AT), est prévu au moins un espace creux (24, 25).

18. Elément de fixation selon la revendication 17, **caractérisé en ce que** l'espace creux est un évidement, en particulier un évidement de type rainure annulaire (24).

19. Elément de fixation selon la revendication 18, **caractérisé en ce que** l'espace creux est un évidemment (24) débouchant sur la périphérie de la douille (19).

20. Elément de fixation selon la revendication 17 ou 18, **caractérisé en ce que** l'espace creux (24) présente un élargissement s'étendant en dessous de la au moins une saillie (23).

21. Elément de fixation selon l'une quelconque des revendications 17 à 20, **caractérisé en ce que** l'espace creux (24) débouche; sur la surface périphérique de la douille (19) à proximité de la surface d'encliquetage (23.1).

22. Elément de fixation selon l'une quelconque des revendications 17 à 21, **caractérisé en ce que** la au moins une saillie est une saillie (23) annulaire entourant concentriquement l'axe de la douille (AT).

23. Elément de fixation selon l'une quelconque des revendications 17 à 22, **caractérisé en ce que** l'espace creux (24) est formé par une section (20.1) agrandie en coupe de l'ouverture de douille (20).

24. Elément de fixation selon l'une quelconque des revendications 17 à 23, **caractérisé en ce que** la douille (19, 19a) est réalisée dans une matière élastique de type caoutchouc, en particulier en caoutchouc ou dans une matière plastique élastique de type caoutchouc.

25. Elément de fixation selon l'une quelconque des revendications 17 à 24, **caractérisé en ce que** la douille (19, 19a) forme une autre surface d'appui (21) du côté douille, éloignée axialement de la au moins une surface d'encliquetage (23.1) **en ce que** la distance axiale entre cette autre surface d'appui du côté douille (21) et la au moins une surface d'encliquetage (23.1) est au maximum égale ou inférieure à la distance axiale entre une première surface formée sur l'ouverture de réception ou de fixation (16) et dans laquelle s'engage la surface d'encliquetage (23.1) par l'arrière, et une deuxième surface formée sur l'ouverture de réception ou de fixation (16), qui repose contre l'autre surface d'appui du côté douille (21).

26. Elément de fixation selon la revendication 25, **caractérisée en ce que** l'autre surface d'appui du côté douille est formée par une section de douille (21) de type bride en saillie sur la périphérie de la douille.

27. Elément de fixation selon l'une quelconque des revendications 17 à 26, **caractérisé en ce que** la douille (19, 19a) est prévue de manière à ne pas pouvoir se déplacer axialement sur un tourillon (17) ou une section de tourillon (17.2) de l'élément de fixation (13, 13a).

28. Elément de fixation selon la revendication 27, **caractérisé en ce que** la douille (19, 19a) est bloquée axialement sur le tourillon (17) par des contre-dépouilles entre le tourillon (17) et la douille (19, 19a).

29. Elément de fixation selon la revendication 28, **caractérisé en ce que** le tourillon (17) ou la section de tourillon (17.2) présente au moins une rainure (18) permettant de recevoir la douille (19).

30. Elément de fixation selon l'une quelconque des revendications 17 à 29, **caractérisé en ce que** le volume (V24, V25) du au moins un espace creux (24, 25) est au moins égal au volume (V23) de la saillie (23).
